Europäisches Patentamt

European Patent Office

Office européen des brevets

(11) Publication number: **0 105 753**

**A2**

# (12) EUROPEAN PATENT APPLICATION

(21) Application number: **83305960.3**

(22) Date of filing: **30.09.83**

(51) Int. Cl.³: **H 04 B 9/00**

(30) Priority: **30.09.82 US 429705**

(43) Date of publication of application:
**18.04.84 Bulletin 84/16**

(84) Designated Contracting States:
**DE FR GB**

(71) Applicant: **XEROX CORPORATION**
Xerox Square - 020
Rochester New York 14644(US)

(72) Inventor: **Rawson, Eric Gordon**
20887 Maureen Way
Saratoga California 95070(US)

(72) Inventor: **Norton, Robert Eugene, Jr.**
855 Rivera Street
Milpitas California 95035(US)

(74) Representative: **Goode, Ian Roy et al,**
European Patent Attorney c/o Rank Xerox Limited Patent
Department 338 Euston Road
London NW1 3BH(GB)

(54) **Fiber optic coupling apparatus.**

(57) Apparatus for coupling a station to a linear fiber-optic network fiber (47) is described. The apparatus comprises four two-fiber biconical couplers (43, 44, 45, 46), two (43, 46) for coupling light arriving in each direction to a light detector (D), and two (44,45) for coupling light from a light source (L) to the fiber (47) in both directions. The light source may be either two separate light sources ($L_1$,$L_2$) or a single source (L) with the light split into two fibers to the two couplers by means of a uniconical coupler (54). Similarly, one detector (D) and a uniconical coupler (55), or two detectors ($D_1$, $D_2$) may be used. The network fiber may be a single fiber optic fiber (47) carrying light in both directions or two fibers, one for each direction. In all cases, the couplers are arranged so that the detectors can detect an incoming message while the local transmitter is transmitting.

*FIG. 4*

## FIBER OPTIC COUPLING APPARATUS

This invention relates to a fiber-optic apparatus for transmitting messages in, and receiving messages from, both directions on a one-fiber or two-fiber linear network. Such an apparatus may be used in a local area computer network for coupling a plurality of stations to a fiber optic network line.

The common local area networks (LANs) are star, ring and linear configurations. A star-configured network may be either active or passive. A star network typically has a central repeater (if active) or a central star coupler (if passive) connected to a number of stations by individual lines. Each station transmits to the central repeater (or star coupler) which retransmits (or divides) the signal to all other stations. In a ring-configured network, packets of information are passed from one station to the next in a circle. Linear network lines may have either one conductor carrying transmissions in both directions or two lines, one for transmissions in each direction.

The network line may be a coaxial cable, a twisted copper wire pair or a fiber optic cable. Fiber optical cable advantages are immunity to electro-magnetic interference, freedom from ground current loops, enhanced security because the cable does not radiate, and potential cost savings. However, fiber optic linear networks have inherent problems.

One potential problem with a fiber optic linear network is the relative difficulty of a station detecting a collision on such a network, where a collision is defined as two stations transmitting at the same time. Typically, the amplitude of a station's own transmitted signal at its receiver is so large in comparison to the amplitude of other stations' signals that such a collision goes undetected by the receiver at the transmitting station. Also, the insertion losses at each station in a linear fiber optic network must be kept to a minimum or the accumulated losses through the network render the network unuseable. As a result of these problems, linear optical fiber networks are difficult to produce on a commercial basis.

An article by B. Kawasaki and K. Hill, Applied Optics, Vol. 16, No. 7, p. 1794 (July, 1977) discusses the fabrication of biconical tapered couplers. The process comprises the steps of twisting two or more fibers together and then fusing the contact area with a flame. The resultant coupler has an insertion loss, for two-fiber couplers, of 0.1 to 0.2dB. The technique can be used for any number of fibers. The literature describes star couplers using up to one hundred fibers.

European patent application No. 82 306437.3 describes the production and characteristics of multi-fiber couplers.

The fiber-optic apparatus of the invention is intended to overcome the problems outlined above, and in particular to enable a station on a linear network to transmit and simultaneously detect another station's transmission. The apparatus of the invention is characterised in that it comprises two pairs of two-fiber couplers, one pair for feeding data in opposed directions into the network and the other pair for detecting data arriving on the network from opposed directions.

This invention takes advantage of the low losses of a two-fiber coupler to implement a linear fiber optic network. Each station is coupled to the fiber line using low loss two-fiber couplers, and the isolation between detectors and transmitters is sufficient for each station to detect a collision during transmission.

Various configurations of the invention will be described with reference to the accompanying drawings, in which:-

Figure 1a is a schematic representation of a two-fiber biconical coupler.

Figure 1b is a schematic representation of a two-fiber uniconical coupler.

Figure 1c is a set of symbols for two and three fiber uniconical and biconical couplers.

Figures 2, 3 and 4 are configurations for coupling a transmitter and a detector to a one-fiber linear network.

Figures 5 and 6 are configurations for coupling a transmitter and a detector to a two-fiber network.

The couplers described below are discussed in relation to a linear network where, briefly stated, no one station is the master or host station, that is, where all stations have equal priority, and where the transmission of one station will inhibit the transmissions of all other stations until the transmitting station has completed its transmission. In the event that two stations transmit simultaneously each will sense the collision, abort the transmission, and wait a random amount of time before attempting to transmit again. This line control procedure is commonly known as Carrier Sense Multiple Access with Collision Detection, or CSMA/CD, and is the line control procedure used in the so-called Ethernet LAN.

In order for this type of network to operate properly, each station must be coupled to the network line in such manner that a signal received from another station can be detected during a transmission. Because of their low losses, two-fiber couplers are well-suited for this use.

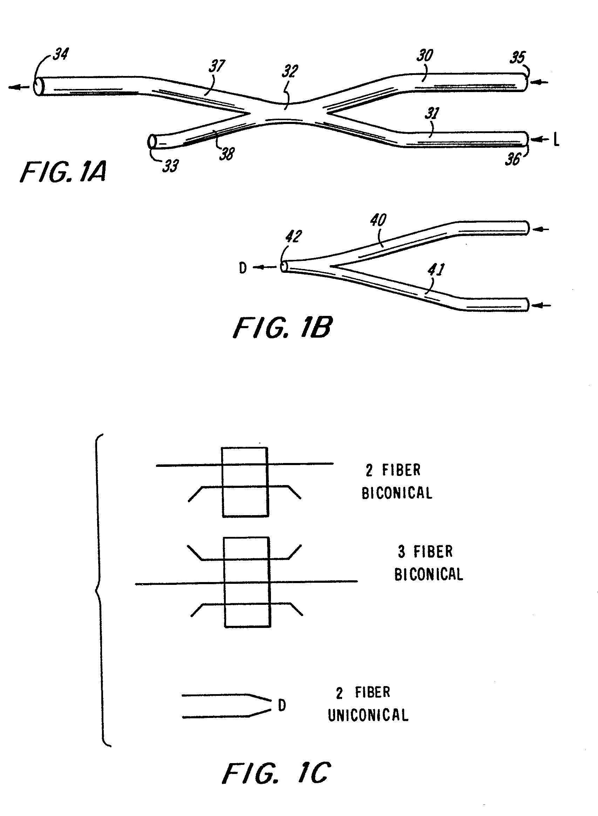

Two-fiber couplers can be fabricated in two configurations. Figure 1a shows the bi-conical configuration. Two fibers 30,31 are twisted together at point 32, then fused together, typically with the use of a small oxy-propane torch, and stretched to form a "waist" at point 32. Light entering fiber 30 at right end 35 from the network or at point 36 from a light source L will propogate through to both outlet fibers 37, 38. If fiber 37 is the continuation of the network fiber, then fiber 38 is not required and may be terminated by a suitable termination 33 which serves to prevent reflection of optical signals.

Figure 1b is a uniconical configuration. The biconical coupler of Figure 1a is cleaved at the waist so that light entering fibers 40,41 from the right will be coupled to a single detector D at point 42. Alternatively, a transmitter at point 42 will transmit light into both fibers 40,41.

Three-fiber biconical and uniconical couplers are constructed in an identical process. The schematic symbols for these couplers are shown in Figure 1c.

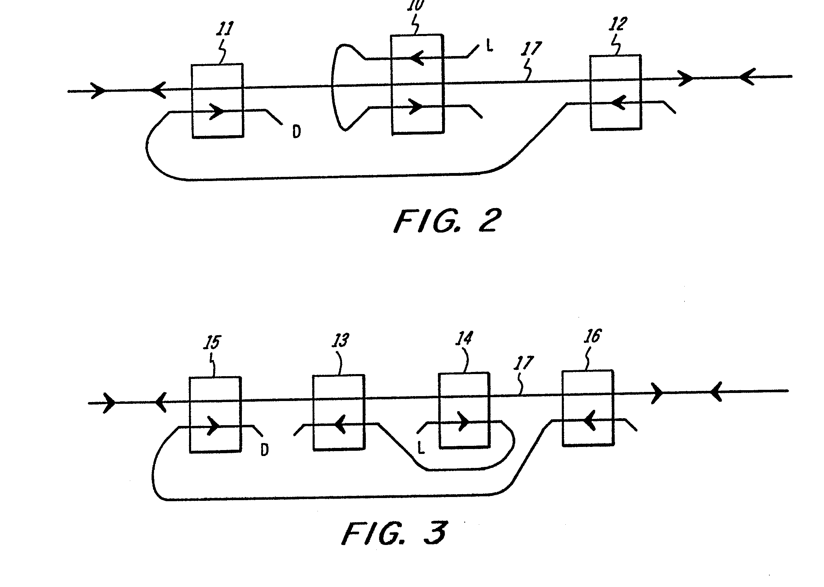

A configuration using two two-fiber couplers and one three-fiber coupler, as shown in Figure 2, is used to transmit and receive in both directions on a one-fiber linear network. The light source L transmits light in both directions from the central coupler 10, while the detector D is coupled to the fiber by two two-fiber couplers 11, 12 so that it is sensitive only to light arriving from the left or right ends. Thus, the source and sensor are decoupled, and a received signal can be detected during transmission. The disadvantage of this circuit is the relatively high loss created by the three fiber coupler 10.

A configuration using only two-fiber couplers, which have lower losses, is shown in Figure 3. The transmitted light is directed outwardly through two-fiber couplers 13 and 14 in series while the detectors receive incoming light through couplers 15, 16 which are also in series. The detector couplers 15, 16 could also be located between the transmitter couplers 13,14 without modifying the performance of the system. The disadvantage of both versions is that the received and transmitted signals must each pass through two couplers.

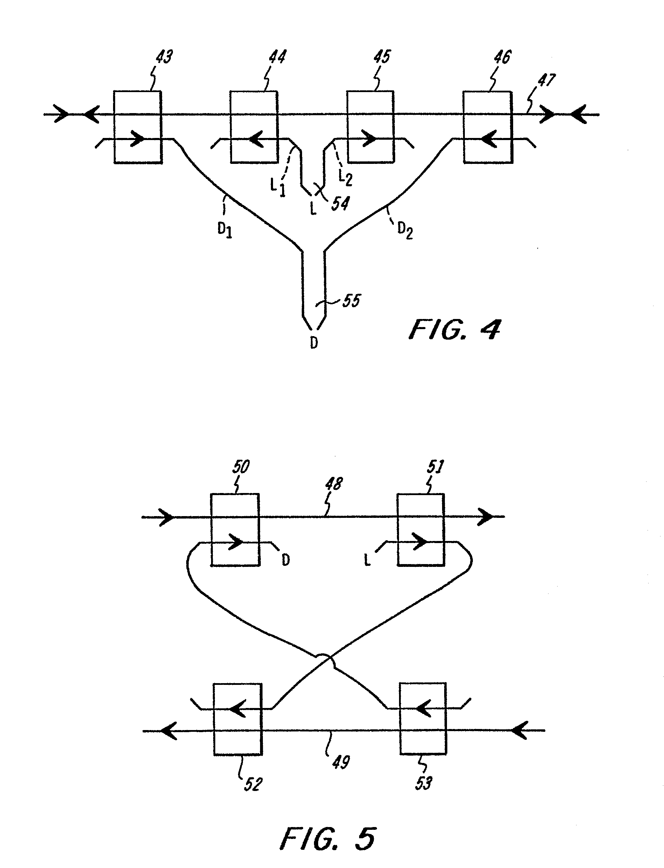

A configuration which avoids the problems of the above-described configuration is shown in Figure 4. A single light source L is coupled to two couplers 44, 45 through a two-fiber uniconical coupler 54, and a detector D is coupled to the other two couplers 43, 46 through another two-fiber uniconical coupler 55. In this configuration, as before, the detector couplers 43, 46 can be located between the transmitter couplers 44, 45. Also, two separate light sources $L_1$, $L_2$ and two light sensors $D_1$, $D_2$ may be used as shown in dotted lines.

A configuration for a two-fiber network using two-fiber couplers is shown in Figure 5. Light is received by the detector D from the left through coupler 50 and from the right through coupler 53, and light is transmitted to the left through coupler 52 and to the right through coupler 51.

In the Figure 5 version, a problem is that light travelling in one direction on the fiber may be coupled through the couplers and back onto the other fiber in the other direction. For example, light travelling to the right on upper fiber 48 may be coupled into the lower fiber of coupler 51 where it will be transmitted around to the upper fiber of coupler 52 and then onto the fiber 49 to the left.

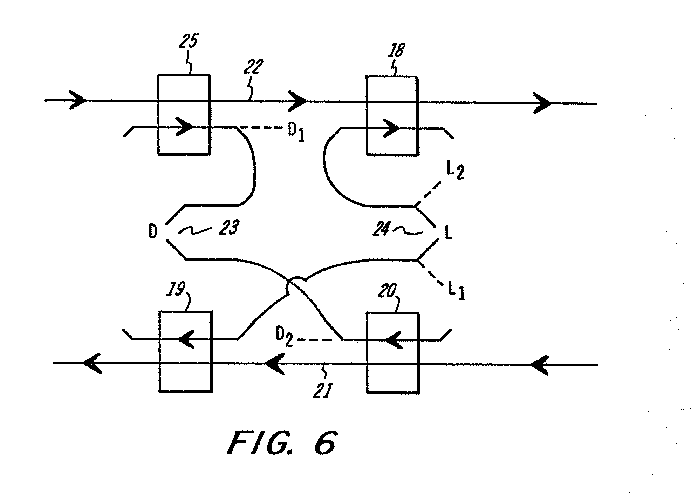

An alternative version which corrects this problem is shown in Figure 6. The detector D receives light either from the left through coupler 25 or from the right through coupler 20. Similarly, light is transmitted to the left through coupler 19, or to the right through coupler 18. Uniconical coupler 24 is a power splitter, with half of the power going to each coupler 18,19. Alternatively, two light sources $L_1$, $L_2$ could be used as shown in dotted lines as well as two detectors $D_1$, $D_2$. In this configuration, losses would be minimised since light is transmitted or received through no more than one two-fiber coupler, and there is no path for cross talk between fibers.

While we have indicated the use of Uniconical couplers at detectors in Figures 1(c), 4 and 6, it is recognised that such a coupler may be not required at a detector if said detector's diameter is sufficiently large to efficiently accept light from an adjacent pair of fibers (unfused and untapered).

CLAIMS:

1.      Fiber-optic apparatus for transmitting messages in, and detecting messages from, both directions on a one-fiber or a two-fiber linear network, characterised in that it comprises two pairs of two-fiber couplers, one pair for feeding data in opposed directions into the network and the other pair for detecting data arriving on the network from opposed directions.

2.      Fiber-optic apparatus according to claim 1 for coupling a station comprising a light transmitter means (L) and a light detector means (D) onto a linear fiber-optic network (47) comprising a first two-fiber coupler (43) for coupling light arriving on the fiber in a first direction to said detector means (D), a second two fiber-coupler (46) for coupling light arriving on the fiber in a second direction to said detector means (D), a third two-fiber coupler (45) for coupling light onto the fiber in the first direction from said transmitter means (L), and a fourth two-fiber coupler (44) for coupling light onto the fiber in the second direction from said transmitter means (L).

3.      Fiber-optic apparatus according to claim 1 comprising coupler means for coupling two transmitters ($L_1$, $L_2$) and two detectors ($D_1$, $D_2$) to a two-fiber linear network (21, 22) so that both detectors can detect incoming messages during a transmission by either transmitter comprising, for each fiber, an upstream two-fiber coupler (20 or 25) for coupling data from the fiber (21 or 22) to a detector ($D_2$ or $D_1$), and a downstream two-fiber coupler (18 or 19) for coupling data from a transmitter ($L_2$ or $L_1$) to the fiber (22 or 21).

4.      Fiber-optic apparatus according to claim 1 adapted to simultaneously transmit messages in both directions on a two-fiber linear network (21,22) and detect messages arriving in either direction, comprising a detector means (D), a transmitter means (L), an upstream two-fiber coupler (20,25) on each fiber (21,22) for coupling data from said fibers to said detector means (D), and a downstream two-fiber coupler (18,19) on each fiber (22,21) for coupling data from said transmitter means (L) to said fibers.

5.    The apparatus of claim 4 wherein said detector means (D) comprises a uniconical two-fiber coupler (23) for coupling data from both upsteam couplers (20,25) to one light detector, and wherein said transmitter means (L) comprises a uniconical two-fiber coupler (24) for coupling data from one transmitter to both downstream couplers (18,19).

6.    Fiber-optic apparatus according to claim 1 comprising coupler means for coupling two transmitters $(L_1,L_2)$ and two detectors $(D_1,D_2)$ to a one-fiber linear network (47) so that both detectors can detect messages during a transmission by either transmitter comprising a first two-fiber coupler (44) for coupling data from a first transmitter $(L_1)$ onto said fiber in a leftward direction, a second two-fiber coupler (43) for coupling data arriving on said fiber from the left to a first detector $(D_1)$, a third two-fiber coupler (46) for coupling data arriving on said fiber from the right to a second detector $(D_2)$, and a fourth two-fiber coupler (45) for coupling data from a second transmitter $(L_2)$ onto said fiber in a rightward direction, said first through fourth couplers being arranged in any order on said fiber.

7.    A fiber-optic appartus according to claim 1 adapted to simultaneously transmit messages in both directions on a one-fiber linear network (47) detect messages arriving in either direction, comprising a detector means (D), a transmitter means (L), a first two-fiber coupler (44) for coupling data from said transmitter means (L) onto said fiber in a leftward direction, a second two-fiber coupler (43) for coupling data arriving on said fiber from the left to said detector means (D), a third two-fiber coupler (46) for coupling data arriving on said fiber from the right to said detector means (D), and a fourth two-fiber coupler (45) for coupling data from said transmitter means onto said fiber in a rightward direction, said first through fourth couplers being arranged in any order on said fiber.

8.    The apparatus of claim 7 wherein said transmitter means (L) comprising a light transmitter and a uniconical two-fiber coupler (54) for coupling the light output of said transmitter to said first and fourth couplers (44,45) and said detector means (D) comprises a light detector and a uniconical two-fiber coupler (55) for coupling the light from said second and third couplers (43,46) to said detector.

9.     Fiber-optic apparatus according to claim 1 including four couplers for coupling a transmitter (L) and a detector (D) to a one-fiber linear network (17), said couplers comprising a first two-fiber coupler (13) for coupling the light from said transmitter (L) onto said fiber in a leftward direction, a second two-fiber coupler (15) for coupling data arriving on said fiber from the left to said detector, a third two-fiber coupler (16) for coupling data arriving on said fiber from the right to said detector, a fourth two-fiber coupler (14) for coupling the light from said transmitter onto said fiber in a rightward direction and wherein said transmitter (L) is connected in series with said first and fourth couplers (13,14) and wherein said detector (D) is connected in series with said second and third couplers (15,16).

10.     Fiber-optic apparatus according to claim 1 including four couplers for coupling a transmitter (L) and a detector (D) to a two-fiber linear network (48,49) said couplers comprising a first two-fiber coupler (51) for coupling the light from said transmitter (L) onto a first fiber (48) in a first direction, a second two-fiber coupler (50) for coupling data arriving on said first fiber (48) in the first direction to said detector (D), a third two-fiber coupler (53) for coupling data arriving on a second fiber (49) in a second direction to said detector (D), a fourth two-fiber coupler (52) for coupling the light from said transmitter (L) onto said second fiber in the second direction, and wherein said transmitter (L) is connected in series with said first and fourth couplers (51,52) and wherein said detector (D) is connected in series with said second and third couplers (50,53).

FIG. 1A

FIG. 1B

2 FIBER
BICONICAL

3 FIBER
BICONICAL

2 FIBER
UNICONICAL

FIG. 1C

**FIG. 2**

**FIG. 3**

0105753

FIG. 4

FIG. 5

FIG. 6